# EUROPÄISCHE PATENTANMELDUNG

(11) **EP 0 834 358 A2**
(43) Veröffentlichungstag der Anmeldung: **08.04.1998**
(21) Anmeldenummer: 97116700.2
(22) Anmeldetag: 24.09.1997
(51) Int. Cl.: B21D 43/24

(54) **Vorrichtung und Verfahren zum Beschicken einer Bearbeitungsstation mit unterschiedlichen plattenförmigen Bauteilen**

(30) Priorität: 01.10.1996 DE 19640517
(71) Anmelder: NSM MAGNETTECHNIK GMBH, D-59399 Olfen (DE)
(72) Erfinder: Ulrich, Hans, 59379 Selm (DE)
(74) Vertreter: Hennicke, Ernst Rüdiger

(57) **Zusammenfassung**

Vorrichtung und Verfahren zum Beschicken einer Bearbeitungsstation mit unterschiedlichen, plattenförmigen Bauteilen (11a, b), insbesondere von Blechen zu einer Umformpresse od.dgl., die einzeln von Stapeln (19, 20) entnommen und von Zufördermitteln (27, 28) wechselweise einer Transporteinrichtung (12) aufgegeben werden. Um hier eine besonders kompakte Bauweise der Vorrichtung zu ermöglichen und praktisch ohne Stillstandszeiten der nachfolgenden Bearbeitungsstation Bauteile zuführen zu können, sind beidseits der Transporteinrichtung (12) mindestens je zwei Entstapelstationen (15a-d) für je eine Bauteilsorte (11a bzw. 11b) vorgesehen und für jede Bauteilsorte gibt es eine beidseits der Transporteinrichtung bis zu den entsprechenden Entstapelstationen reichende Zufördereinrichtung (27, 28), die in bevorzugter Ausgestaltung der Erfindung im wesentlichen aus in ihrer Förderrichtung umschaltbaren Hängendförderern bestehen. Nach dem erfindungsgemäßen Verfahren wird von jeder Bauteilsorte erst ein Stapel auf einer Seite der Transporteinrichtung vollständig entstapelt und anschließend die Förderrichtung der Zufördereinrichtung umgekehrt und ein auf der anderen Seite der Transporteinrichtung angeordneter Stapel teilweise abgebaut, während auf der ersten Seite ein neuer, dritter Stapel in Position zur Zufördereinrichtung gebracht wird.

## Beschreibung

Die Erfindung betrifft eine Vorrichtung zum Beschicken einer Bearbeitungsstation mit unterschiedlichen plattenförmigen Bauteilen, insbesondere von Blechen zu einer Umformpresse od.dgl., die einzeln von Stapeln entnehmbar und mittels Zufördermitteln wechselweise einer Transporteinrichtung zuführbar sind. Die Erfindung ist weiterhin auf ein Verfahren zum Beschicken einer Bearbeitungsstation mit unterschiedlichen, plattenförmigen Bauteilen gerichtet, insbesondere von Blechen zu einer Umformpresse, wobei die unterschiedlichen Bauteile von entsprechenden Bauteilstapeln entnommen und abwechselnd mittels Zufördermitteln einer Transporteinrichtung aufgegeben werden.

Insbesondere in der Automobilindustrie stellt sich häufig die Aufgabe, mehrere Bleche unterschiedlicher Form und Abmessung, wie z.B. Rohlinge für vordere und hintere Kotflügel, einer Bearbeitungsstation zuzuführen, insbesondere einer mit mehreren Gesenken versehenen Umformpresse, in der mit einem Pressenhub gleichzeitig zwei oder mehr verschiedene Teile aus den zugeführten Blechrohlingen hergestellt werden. Die verschiedenen Blechrohlinge werden hierzu von auf Paletten angeordneten Stapeln entnommen, die seitlich neben einer zur Umformpresse führenden Transporteinrichtung, insbesondere einem Bandförderer, angeordnet sind, der sie mittels einer Zufördereinrichtung übergeben werden. Für die Übernahme der Bauteile von den Stapeln und die Übergabe auf die Transporteinrichtung sind verschiedene Einrichtungen vorgeschlagen worden, beispielsweise eine Einrichtung mit einem oder mehreren vertikal verfahrbaren Hebern, der bzw. die von oben auf den Bauteilstapel herabfahren, dort ein Bauteil greifen und dieses dann nach oben anheben können, um es dann nach Verfahren über das Transportband auf diesem abzulegen. Diese Einrichtung hat den Nachteil, daß die "Teilzeiten", die zum Entnehmen eines Bauteils und Ablegen auf der Transporteinrichtung erforderlich sind, sehr groß sind, so daß nur wenige Teile binnen eines vorgegebenen Zeitraums in der nachfolgenden Bearbeitungsstation bearbeitet werden können. Diese Teilzeiten werden darüber hinaus mit abnehmender Höhe des jeweiligen Stapels immer größer, da die Hubhöhe des Hebers sich dabei ebenfalls vergrößert.

Um diesen Nachteil der abnehmenden Stapelhöhe und sich damit vergrößernden Hubhöhe für die Hebeeinrichtung zu vermeiden, ist auch bereits vorgeschlagen worden, dem Stapel bzw. der diesen tragenden Palette eine Hubeinrichtung zuzuordnen, mit der der Stapel nach jedem Entnehmen eines Bauteils um einen Betrag angehoben wird, der der Dicke des zuvor entnommenen Bauteils etwa entspricht. Der Hubweg für die Hebeeinrichtung bleibt dann für jedes Bauteil etwa derselbe. Sobald jedoch ein Stapel einer Bauteilsorte vollständig abgebaut ist, ist es erforderlich, die Hubeinrichtung wieder vollständig nach unten zu verfahren, um einen neuen Stapel in den Arbeitsbereich des Hebers zu bringen, wodurch während dieser Zeit keine Bauteile der nachfolgenden Bearbeitungsstation zugeführt werden können. Auch wenn mehrere Bauteilstapel auf derselben Palette angeordnet werden, muß diese nach dem Entstapeln eines ersten Stapels mittels der Hubeinrichtung wieder in ihre tiefste Position verfahren werden, bevor sie so unter dem Heber positioniert werden kann, daß dieser Zugriff auf einen zweiten, auf der Palette angeordneten Stapel hat. Da während dieser "Rüstzeiten" auch die nachfolgende Bearbeitungsstation nicht produzieren kann, kommt es zu Produktionsausfällen, im Falle einer Umformpresse zu mehreren Leerhüben bei jedem Stapelwechsel, in denen keine Kotflügel oder sonstige Formteile aus den hierfür vorgesehenen Blechrohlingen gefertigt werden können.

Aufgabe der Erfindung ist es, eine Vorrichtung und ein Verfahren der eingangs genannten Art zu schaffen, womit es möglich ist, Bauteile unterschiedlicher Form und/oder Abmessungen in gleichmäßigen Zeitabständen einer Bearbeitungsstation zuzuführen, wobei beim Wechsel auf einen neuen Bauteilstapel keine Unterbrechungen beim Zuführen der Bauteile verschiedener Bauteilsorten zur Bearbeitungsstation entstehen.

Diese Aufgabe wird mit der Vorrichtung erfindungsgemäß dadurch gelöst, daß beidseits der Transporteinrichtung mindestens je zwei Entstapelstationen für je eine Bauteilsorte vorgesehen sind, und daß für jede Bauteilsorte eine beidseits der Transporteinrichtung bis zu den entsprechenden Entstapelstationen reichende Zufördereinrichtung angeordnet ist. Nach dem erfindungsgemäßen Verfahren wird für jede Bauteilsorte je eine Entstapelstation auf jeder Seite der Transporteinrichtung sowie eine eigene, die Entstapelstationen einer Bauteilsorte beidseits der Transporteinrichtung erreichende Zufördereinrichtung vorgesehen, wobei von jeder Bauteilsorte zuerst ein erster Stapel auf einer Seite der Transporteinrichtung entstapelt wird und die entstapelten Bauteile der Transporteinrichtung mittels der zugehörigen Zufördereinrichtung aufgegeben werden, während entsprechende zweite Stapel derselben Bauteilsorten auf der jeweils anderen Seite der Transporteinrichtung bereits in Wartestellung zur Zufördereinrichtung ausgerichtet sind, und wobei nach dem Entstapeln der ersten Stapel die zweiten Stapel von jeder Bauteilsorte entstapelt werden, während an den Stellen der jeweils ersten Stapel neue, dritte Stapel in ihre Wartestellung zur jeweiligen Zufördereinrichtung gebracht werden.

Erfindungsgemäß gibt es also von jeder Bauteilsorte praktisch immer zwei Stapel, je einen seitlich neben der Transporteinrichtung, die von der Zufördereinrichtung beide gleich gut erreichbar sind, die daher nach dem Entstapeln des ersten Stapels auf der einen Seite der Transporteinrichtung praktisch ohne Unterbrechung von dem bereits in richtiger (Höhen-) Lage ausgerichteten zweiten Stapel auf der anderen Seite der Transporteinrichtung Bauteile entnehmen kann, während auf der ersten Seite anstelle des ersten, bereits abgearbeiteten Stapels ein neuer, dritter Stapel in die gewünschte Entstapelposition gebracht wird. Zum Ausrichten dieses neuen, dritten Stapels steht dabei ausreichend Zeit zur Verfügung, nämlich soviel Zeit, wie erforderlich ist, den zweiten Stapel an der anderen Seite der Transporteinrichtung vollständig abzubauen. Diese Zeit reicht leicht aus, eine Palette für den bzw. die Stapel aus einer angehobenen Stellung nach dem vollständigen Abbau eines Stapels mittels einer Hubeinrichtung wieder in ihre tiefste Lage zu bringen und aus der Vorrichtung zu entnehmen und gegen eine neue Palette auszutauschen.

Eine besonders vorteilhafte Ausgestaltung der Vorrichtung ergibt sich, wenn jede Zufördereinrichtung im wesentlichen aus mindestens einem steuerbaren Hängendförderer, insbesondere einem Magnetbandförderer besteht. Die Hängendförderer sind quer zur Transportrichtung der Transporteinrichtung über dieser angeordnet und weisen mindestens ein umlaufendes Transportband auf, dessen Förderrichtung einfach umgeschaltet werden kann. Für ferromagnetische (Eisen-) Bauteile, wie sie in der Automobilindustrie üblich sind, haben sich Magnetbandförderer als besonders zweckmäßig erwiesen, bei denen an der Innenseite der Transportbänder schaltbare Magneteinheiten angeordnet sind, mit deren Hilfe die Bleche gegen das Transportband gezogen und an der gewünschten Stelle durch Abschalten der Magnetwirkung auf die Transporteinrichtung abgeworfen werden können. Für nicht magnetische Bauteile ist es auch möglich, Unterdruck-Transportbänder bzw. einen Vakuumbandförderer zu verwenden, bei denen die Bauteile an das Transportband angesaugt und an diesem gehalten werden.

Die Zufördereinrichtungen für die verschiedenen Bauteilsorten sind zweckmäßig in einem Abstand voneinander angeordnet, der der Breite der Bauteilstapel bzw. der diese tragenden Paletten mindestens entspricht. Auf diese Weise kann es nicht zu Kollisionen oder Behinderungen einer Palette mit der einen Bauteilsorte durch eine auf derselben Seite der Transporteinrichtung in einer Entstapelstation angeordneten Palette mit Bauteilen der anderen Bauteilsorte kommen, unabhängig davon, in welcher Lage sich die erste Palette relativ zur zugehörigen Zufördereinrichtung befindet.

Um den Abstand der jeweiligen Zufördereinrichtung von der Oberfläche des gerade entstapelten Bauteilstapels möglichst etwa konstant zu halten, ist den Entstapelstationen an jeder Seite der Transporteinrichtung zweckmäßig mindestens eine Hubeinrichtung zugeordnet. Vorzugsweise weist jede Entstapelstation hier eine eigene Hubeinrichtung auf, so daß die Stapel jeder Bauteilsorte auf jeder Seite der Transporteinrichtung unabhängig voneinander in ihrer Höhenlage einstellbar sind. Als besonders einfach und zuverlässig haben sich hierfür hydraulische Hubtische bewährt, obwohl auch Spindelhubtische verwendbar sind.

Die erfindungsgemäße Vorrichtung kann mit Verschiebeeinrichtungen für die Bauteilstapel bzw. die diese tragenden Paletten quer zur Förderrichtung der Zufördereinrichtungen versehen sein. Mit diesen Verschiebeeinrichtungen, zweckmäßig an den Hubeinrichtungen angeordneten Verschiebezylindern od.dgl., können die Bauteilstapel genau in der gewünschten Position relativ zur jeweiligen Zufördereinrichtung positioniert werden. Zur Lageerkennung des zu entstapelnden Stapels relativ zur Zufördereinrichtung ist jeder Entstapelstation vorzugsweise eine Stapelabtasteinrichtung zugeordnet, beispielsweise eine oder mehrere Lichtschranken, die beim Verfahren der die Stapel tragenden Palette die Vorderkante eines Stapelpaketes erkennen und die Verschiebeeinrichtung bzw. den Fahrantrieb des Hubtisches von schnell auf langsam oder auf stop umschalten können.

Zum leichteren Entnehmen der Einzelbleche von den jeweiligen Stapeln ist jede Entstapelstation vorzugsweise mit einer Blechspreizeinrichtung versehen, für ferromagnetische Bauteile beispielsweise mit einer Blechspreizmagneteinrichtung mit mehreren, quer zur Durchlaufrichtung der Bleche verstellbaren, permanentmagnetischen Blechspreizmagneten, die auf einer Traverse montiert sein können. Derartige Blechspreizmagnete sind in der Lage, das jeweils oberste Blech eines Stapels von diesem hochzuspreizen, wodurch vermieden wird, daß zwei oder mehr Bleche gleichzeitig von einem Stapel entnommen werden. Die Bauteile können von den einzelnen Bauteilstapeln den Zufördereinrichtungen mit Hilfe von Übergabevorrichtungen übergeben werden, beispielsweise mittels Unterdruckhalteeinheiten und/oder Magnethalteeinheiten, die die Bauteile an ihrer Oberfläche fassen und gegen das Transportband der zugehörigen Zufördereinrichtung anlegen.

Die Zufördereinrichtungen können je mindestens zwei von einem gemeinsamen Antrieb angetriebene Bandförderer aufweisen, deren Abstand voneinander einstellbar ist. Diese Anordnung ermöglicht die Anpassung der Vorrichtung an Bauteile verschiedener Breite, indem der Abstand der beiden Bandförderer so eingestellt wird, daß sie das zu transportierende Bauteil längs ihrer Vorder- und Hinterkante fassen. Um hier ein schnelle Einstellbarkeit zu gewährleisten, sind die Bandförderer zweckmäßig mittels motorisch angetriebenen Gewindespindeln lageverstellbar.

Die Vorrichtung kann im Bereich der Zufördereinrichtungen und/oder der Transporteinrichtung mit mindestens einer Doppelblechkontrolleinrichtung versehen sein, mit deren Hilfe leicht festgestellt werden kann, ob eine oder mehrere Zufördereinrichtungen unzulässigerweise ein sogenanntes Doppelblech vom Stapel übernommen hat, d.h. zwei einzelne Bleche, die infolge von Adhäsion od.dgl. aneinander haften und der nachfolgenden Umformpresse nicht zugeführt werden dürfen. Bei Feststellen eines derartigen Doppelbleches durch die Doppelblechkontrolleinrichtung kann die Förderrichtung der Transporteinrichtung kurzzeitig umgekehrt werden und das so auf der Transporteinrichtung abgelegte Doppelblech auf eine Doppelblechablage aus der Vorrichtung ausgeworfen werden.

Die Transporteinrichtung für die Bauteile besteht vorzugsweise im wesentlichen aus mindestens einem Riemenförderer mit Halteeinrichtungen für die Bauteile. Solche Riemenförderer können für ferromagnetische Bauteile bevorzugt Magnetbandförderer sein, bei denen die Bleche mit Hilfe von Magneteinheiten fest gegen ein umlaufendes Transportband gezogen werden und so während ihres Transportes ihre Lage relativ zum Transportband beibehalten. Es ist auch möglich, die Halteeinrichtungen aus Unterdruckeinheiten aufzubauen, mit deren Hilfe die Bauteile gegen das Förderband angesaugt werden.

Eine besonders vorteilhafte Ausgestaltung des erfindungsgemäßen Verfahrens ergibt sich, wenn ein Stapel der einen Bauteilsorte von einer Seite neben der Transporteinrichtung entstapelt wird, während gleichzeitig ein Stapel der anderen Bauteilsorte von der gegenüberliegenden Seite neben der Transporteinrichtung entstapelt wird. Bei diesem Verfahren liegen je zwei Stapel unterschiedlicher Bauteile an der Transporteinrichtung einander diagonal gegenüber, wobei eine erste Zufördereinrichtung die Bauteile von dem ersten Stapel auf der einen Seite der Transporteinrichtung zur Mitte hin fördert, während eine zweite Zuführeinrichtung entgegengesetzt fördert und die Bauteile von der anderen Seite der Transporteinrichtung aufgibt. Nach dem vollständigen Entstapeln eines Bauteilpaketes wird die Förderrichtung der Zuführeinrichtungen umgeschaltet, woraufhin die an der jeweils anderen Diagonale ausgerichteten Stapel wenigstens teilweise entstapelt werden. Besonders vorteilhaft hat sich bei dem erfindungsgemäßen Verfahren erwiesen, wenn nach dem vollständigen Entstapeln eines ersten Stapels an einer ersten Seite der Transporteinrichtung die zweiten Stapel aller Bauteilsorten an der jeweils gegenüberliegenden Seite der Transporteinrichtung entstapelt werden.

Weitere Merkmale und Vorteile der Erfindung ergeben sich aus der nachfolgenden Beschreibung und den Zeichnungen, worin eine bevorzugte Ausführungsform der Erfindung an einem Beispiel näher erläutert wird. Es zeigt:
- Fig. 1: eine Ausführungsform der erfindungsgemäßen Vorrichtung mit vier Entstapelstationen in einer Ruhestellung, in einer stark schematisierten Draufsicht;
- Fig. 2: den Gegenstand der Fig. 1 in einer Arbeitsstellung der Entstapelstation und
- Fig. 3: den Gegenstand der Fig. 2 in einer vereinfachten Ansicht längs des Pfeiles III.

In der Zeichnung bezeichnet 10 eine Beschickungsvorrichtung, die dazu dient, Blechrohlinge 11a, 11b unterschiedlicher Formen und Abmessungen abwechselnd einer nachgeschalteten Bearbeitungsstation zuzuführen, im vorliegenden Fall einer (nicht dargestellten) Umformpresse, die mit zwei Gesenken versehen ist und bei einem Pressenhub aus zwei unterschiedlichen Blechrohlingen 11a, 11b die gewünschten Teile, beispielsweise Karosserieteile für ein Kraftfahrzeug, herstellt.

Die Blechrohlinge 11a und 11b werden der Bearbeitungsstation mittels einer Transporteinrichtung 12 zugeführt, die hier im wesentlichen aus vier parallel nebeneinander liegenden Aufgabebändern 13a-d sowie vier in Transportrichtung hinter diesen Aufgabebändern liegenden Beschickungsbändern 14a-d besteht, mit deren Hilfe die Blechrohlinge von den Aufgabebändern übernommen und in Richtung auf die Umformpresse weitertransportiert werden. Die Aufgabebänder 13a-d und die Beschickungsbänder 14a-d haben jeweils einen gemeinsamen, steuerbaren Antrieb, der jedoch aus Übersichtlichkeitsgründen in den Zeichnungen nicht dargestellt ist.

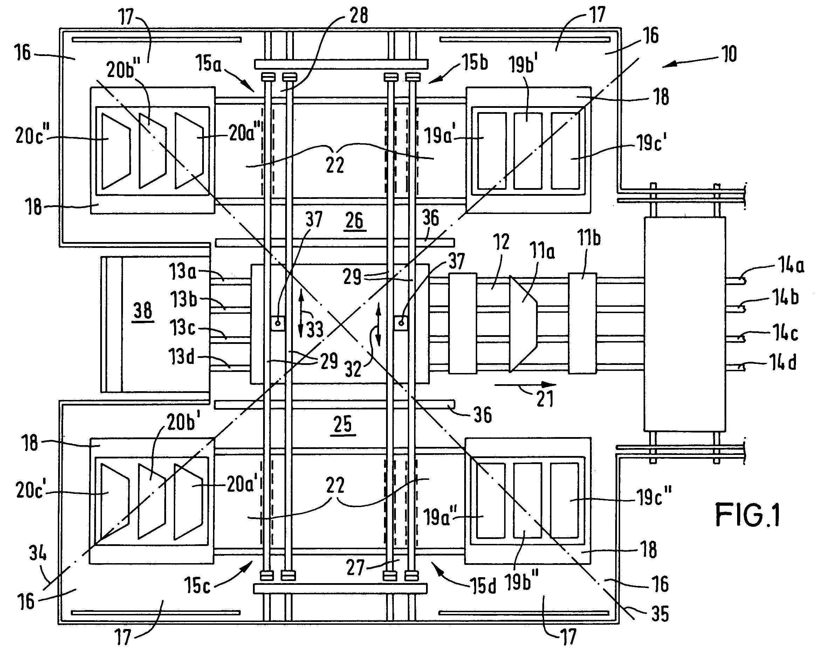

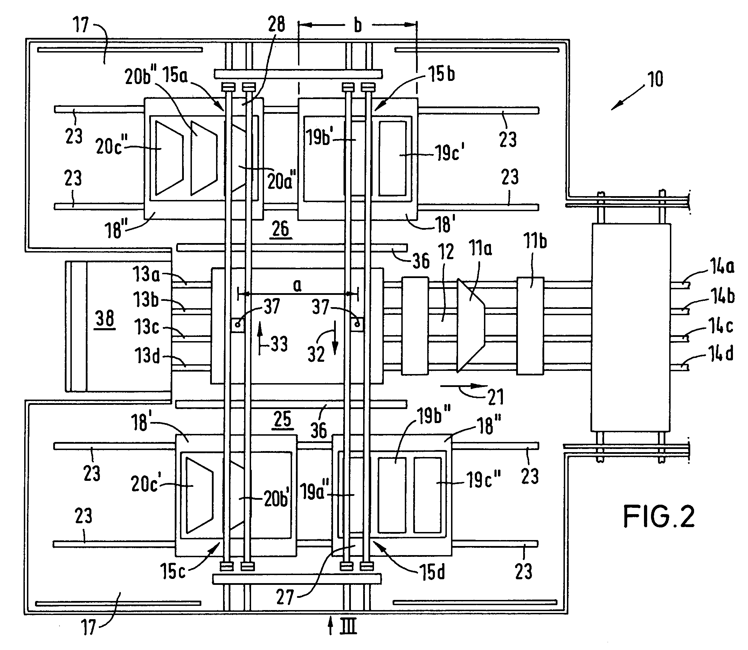

Die in der Draufsicht etwa quadratische Beschickungsvorrichtung weist in jedem ihrer vier Eckbereiche 16 eine Übernahmestation 17 für Paletten 18 auf, auf denen die Blechteilrohlinge 11a bzw. 11b in je drei Stapeln 19a-c bzw. 20a-c in Transportrichtung 21 der Transporteinrichtung 12 hintereinander angeordnet sind, wobei die innenliegenden Stapel mit 19a', 20a', 19a'' und 20a'', die außenliegenden Stapel mit 19c', 20c', 19c'' und 20c'' und die mittleren Stapel mit 19b', 20b', 19b'' und 20b'' bezeichnet sind. An jeder Übernahmestation 17 können somit Paletten 18 mit den darauf angeordneten Blechteilstapeln beidseits der Transporteinrichtung 12 angeordnet werden. Die beiden Paletten, die gemäß Fig. 1 auf einer gemeinsamen Diagonalen 34 liegen, sind in Fig. 2 mit 18' bezeichnet, während die beiden auf der anderen Diagonalen 35 angeordneten Paletten mit 18'' bezeichnet sind.

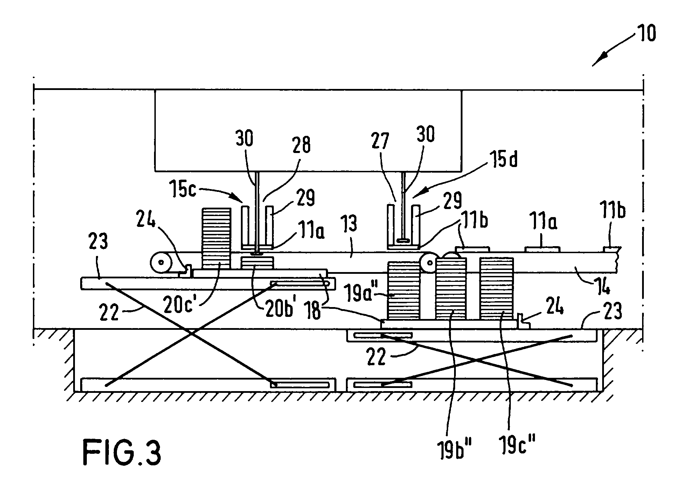

Wie sich insbesondere aus Fig. 3 ergibt, ist die Beschickungsvorrichtung 10 an allen vier Eckbereichen mit einem Hubtisch 22 versehen, der eine obere Ablagefläche 23 für eine Palette 18 bildet, die dort mittels einer Verschiebeeinrichtung 24 parallel zur Transportrichtung 21 verschieblich ist.

Wie sich insbesondere aus Fig. 1 ergibt, sind die Paletten 18 mit den verschiedenen Blechrohlingen 11a bzw. 11b so in der Vorrichtung 10 angeordnet, daß sich Paletten 18' und 18'' mit der einen Bauteilsorte 11a beidseits der Transporteinrichtung 12 in Transportrichtung 21 hinten und die Paletten 18' und 18'' mit Blechrohlingen der anderen Bauteilsorte 11b zu beiden Seiten 25 bzw. 26 der Transporteinrichtung in Transportrichtung 21 vorne in der Beschickungsvorrichtung befinden. Jeder Bauteilsorte 11a bzw. 11b ist eine eigene Zufördereinrichtung 27 bzw. 28 zugeordnet, von denen jede im wesentlichen aus einem Hängendförderer, im dargestellten Beispiel einem Magnetbandförderer mit zwei Förderbändern 29 sowie aus je einer Übergabevorrichtung 30 an jeder Entstapelstation 15a-15d besteht. Die Förderbänder 29 beider Zufördereinrichtungen 27, 28 sind reversierbar, d.h. ihre Förderrichtung kann frei gewählt und schnell umgestellt werden.

Gemäß Fig. 2 ist der Abstand a zwischen den beiden Zufördereinrichtungen 27 und 28 etwa so groß wie die Breite b einer Palette.

Die beschriebene Vorrichtung arbeitet wie folgt:

Nachdem die Beschickungsvorrichtung 10 an ihren vier Übernahmestationen 17 in der in Fig. 1 dargestellten Weise mit Paletten 18 beschickt ist, werden diese mit Hilfe der Verschiebeeinrichtungen 24 so unterhalb der Förderbänder 29 positioniert, daß die jeweils innenliegenden Stapel 19a', 20a', 19a'' und 20a'' auf beiden Seiten 25 und 26 der Transporteinrichtung 12 im Zugriffsbereich der Übergabevorrichtungen 30 liegen.

Die unterschiedlichen Blechrohlinge 11a bzw. 11b werden der Transporteinrichtung 12 mit Hilfe der Zufördereinrichtungen 27, 28 wechselweise aufgegeben, wozu immer einander diagonal gegenüberliegende Stapel 19a' bzw. 20a' etwa zeitgleich entstapelt und mit den in entgegengesetzte Förderrichtungen 32 bzw. 33 laufenden Förderbändern 29 zur Anlagenmitte transportiert und dort auf die Aufgabebänder 13a-d abgeworfen werden. Nach jeder Entnahme eines Bleches 11a bzw. 11b von dem Stapel 19a' bzw. 20a' wird die entsprechende Palette mit Hilfe des jeweiligen Hubtisches 22 um einen Betrag angehoben, der der Dicke der Einzelbleche etwa entspricht. Damit ist sichergestellt, daß der Hubweg, den die Übergabevorrichtung 30 - hier ein Unterdrucksauger - ausführt, um ein Blech vom jeweiligen Stapel zu den Förderbändern 29 anzuheben, immer etwa gleich gering ist.

Sobald die beiden ersten Stapel 19a' bzw. 20a' vollständig entstapelt sind, wird die Förderrichtung 32 bzw. 33 der beiden Zufördereinrichtungen 27, 28 umgekehrt, so daß diese nunmehr Bleche von den anderen beiden, bereits in Wartestellung unter den Förderbändern positionierten Stapeln 19a'', 20a'' auf der jeweils anderen Seite 26 bzw. 25 der Transporteinrichtung entstapeln und den Aufgabebändern zuführen können. In der Zwischenzeit werden die Paletten der (bereits entstapelten) ersten Stapel 19a' bzw. 20a' mittels der zugehörigen Hubtische 22 wieder nach unten verfahren und mit Hilfe der Verschiebeeinrichtungen 24 anschließend die im mittleren Bereich dieser Paletten gelegenen Stapel 19b' bzw. 20b' unter die Zufördereinrichtungen 27, 28 in den Zugriffsbereich der Übergabevorrichtungen 30 gebracht. Anschließend wird die Förderrichtung 32 bzw. 33 der Förderbänder 29 wieder umgeschaltet und die mittleren (dritten) Stapel 19b' bzw. 20b' können entstapelt werden, wie dies in den Fig. 2 und 3 dargestellt ist.

Man erkennt, daß es mit der Vorrichtung nicht zu Stillstandszeiten beim Beschicken der Bleche zur nachfolgenden Bearbeitungsstation kommt, da nach jedem vollständigen Entstapeln eines Stapels auf einer Seite der Vorrichtung sich bereits ein weiterer Stapel in Wartestellung auf der anderen Seite der Vorrichtung befindet, von dem die Zufördereinrichtung nach einfachem Umschalten ihrer Förderrichtung Bleche entnehmen kann.

In besonders bevorzugter Ausgestaltung des erfindungsgemäßen Verfahrens werden erst zwei entlang der ersten Diagonalen 34 einander gegenüberliegende Paletten 18' vollständig entstapelt, und die entlang der anderen Diagonalen 35 ausgerichteten Paletten 18'' mit ihren inneren Stapeln 19a'' bzw. 20a'' dienen vorerst nur als Pufferstapel, von denen Bleche nur in der Zeit entnommen werden, während der die bereits teilentladenen Paletten 18' entlang der ersten Diagonale 34 von den Hubtischen nach unten verfahren und unter den Zuförderern neu positioniert werden. Dies hat zur Folge, daß von den Stapeln 19a'' bzw. 20a'' der zweiten Paletten 18'' erst wenige Bleche entnommen sind, wenn die ersten Paletten 18' bereits völlig leer sind und gegen neue Paletten ausgetauscht werden können. Erst dann werden die entlang der zweiten Diagonale 35 ausgerichteten zweiten Paletten 18'' vollständig in der zuvor schon beschriebenen Weise entstapelt, wobei dann die neuen (dritten) Paletten mit ihren innenliegenden Stapeln die Umrüstzeiten vom Stapel 19, 20a'' auf 19, 20b'' bzw. von 19, 20b'' auf 19, 20c'' überbrücken. Diese Verfahrensweise ermöglicht den geringen Abstand a zwischen beiden Zuförderern, der damit nur unwesentlich größer ist als die Breite b der einzelnen Paletten 18.

Damit die Paletten 18 bzw. die darauf angeordneten Blechstapel 19, 20 immer genau zur jeweiligen Zufördereinrichtung 27, 28 bzw. deren Übergabevorrichtung 30 ausgerichtet werden können, ist jeder Stapelstation eine (lediglich schematisch dargestellte) Stapelabtasteinrichtung 26 zugeordnet, mit je zwei im Abstand voneinander angeordneten Lichtschranken, die beim Vorschieben der Paletten 18 mittels der Verschiebeeinrichtungen 24 die Kanten des abzubauenden Blechstapels abtasten. Beim Erfassen der Vorderkante des Stapels mittels der ersten Lichtschranke wird der Antrieb der Verschiebeeinrichtung 24 von schnell auf langsam umgeschaltet und beim Ertasten durch die zweite Lichtschranke stillgesetzt. Die Lichtschranken können in ihrer Lage mittels einer angetriebenen Gewindespindel eingestellt werden.

Um zu vermeiden, daß der nachfolgenden Umformpresse ein sogenanntes Doppelblech, also zwei gleichzeitig von einem Stapel entnommene, aneinander haftende Blechrohlinge zugeführt wird, was schwerwiegende Beschädigungen des Pressengesenkes zur Folge haben könnte, ist die Beschickungsvorrichtung 10 an ihren Zufördervorrichtungen mit Doppelblechkontrolleinrichtungen 37 versehen, die im wesentlichen aus die Dicke der gerade von den Zufuhreinrichtungen transportierten Bauteile ermittelten Sensoren bestehen. Sobald die Sensoren eine zu große (doppelte) Bauteildicke feststellen, wird die Transportrichtung der Aufgabebänder 13a-d umgekehrt und die dann auf die Aufgabebänder abgeworfenen Bauteile nach hinten aus der Vorrichtung 10 auf eine Doppelblechablage 38 ausgeworfen.

Die Erfindung ist nicht auf die dargestellte und beschriebene Ausführungsform beschränkt, sondern es ergeben sich vielfältige Änderungen und Ergänzungen, ohne den Rahmen der Erfindung zu verlassen. So ist es nicht unbedingt erforderlich, die unterschiedlichen Bauteile auch immer von zwei verschiedenen Seiten der Transporteinrichtung gleichzeitig zuzuführen, sondern es können auch erst zwei Stapel verschiedener Bleche von einer Seite 25 abgebaut werden und anschließend nach Umschalten der Förderrichtung der Zuförderer die entsprechenden Stapel von der zweiten Seite 26. Hierbei können besonders leicht auch weitere Entstapelstationen auf beiden Seiten der Transporteinrichtung vorgesehen werden, beispielsweise, wenn drei oder mehr unterschiedliche Blechrohlinge der nachfolgenden Bearbeitungsstation abwechselnd zugeführt werden sollen. In diesem Fall ist die Vorschubrichtung aller Paletten durch die Beschickungsvorrichtung zweckmäßig dieselbe, wodurch es möglich bleibt, den Abstand der Zufördereinrichtungen voneinander gering zu halten und auf ein Maß zu beschränken, daß der Breite der einzelnen Palette etwa entspricht.

## Patentansprüche

1. Vorrichtung zum Beschicken einer Bearbeitungsstation mit unterschiedlichen plattenförmigen Bauteilen, insbesondere von Blechen zu einer Umformpresse od.dgl., die einzeln von Stapeln entnehmbar und von Zufördermitteln wechselweise einer Transporteinrichtung zuführbar sind, **dadurch gekennzeichnet, daß** beidseits der Transporteinrichtung (12) mindestens zwei Entstapelstationen (15a,b bzw. 15c,d) für je eine Bauteilsorte (11a bzw. 11b) vorgesehen sind, und daß für jede Bauteilsorte (11a bzw. 11b) eine beidseits der Transporteinrichtung (12) bis zu den entsprechenden Entstapelstationen (15a-d) reichende Zufördereinrichtung (27, 28) angeordnet ist.

2. Vorrichtung nach Anspruch 1, **dadurch gekennzeichnet, daß** jede Zufördereinrichtung (27, 28) im wesentlichen aus mindestens einem steuerbaren Hängendförderer (29), insbesondere einem Magnetbandförderer oder Vakuumbandförderer, besteht.

3. Vorrichtung nach Anspruch 1 oder 2, **dadurch gekennzeichnet, daß** die Zufördereinrichtungen (27, 28) für die verschiedenen Bauteilsorten (11a bzw. 11b) in einem Abstand (a) voneinander angeordnet sind, der der Breite (b) der Bauteilstapel (19, 20) bzw. der diese tragenden Paletten (18) mindestens entspricht.

4. Vorrichtung nach einem der Ansprüche 1 bis 3, **dadurch gekennzeichnet, daß** den Entstapelstationen (15a-d) an jeder Seite der Transporteinrichtung (12) mindestens eine Hubeinrichtung (22) zugeordnet ist.

5. Vorrichtung nach einem der Ansprüche 1 bis 4, **dadurch gekennzeichnet, daß** jeder Entstapelstation (15a-d) eine eigene Hubeinrichtung (22) zugeordnet ist.

6. Vorrichtung nach Anspruch 4 oder 5, **dadurch gekennzeichnet, daß** die Hubeinrichtungen hydraulische Hubtische oder Spindelhubtische (22) sind.

7. Vorrichtung nach einem der Ansprüche 1 bis 6, **dadurch gekennzeichnet, daß** die Förderrichtung (32, 33) der Zufördereinrichtungen (27, 28) umkehrbar ist.

8. Vorrichtung nach einem der Ansprüche 1 bis 7, **gekennzeichnet durch** eine Verschiebeeinrichtung (24) für die Bauteilstapel (19, 20) bzw. die diese tragenden Paletten (18) quer zur Förderrichtung (32, 33) der Zufördereinrichtungen (27, 28).

9. Vorrichtung nach einem der Ansprüche 1 bis 8, **dadurch gekennzeichnet, daß** jeder Entstapelstation (15a-d) eine Stapelabtasteinrichtung (36) zur Lageerkennung des zu entstapelnden Stapels (19, 20) relativ zur Zufördereinrichtung (27, 28) zugeordnet ist.

10. Vorrichtung nach Anspruch 9, **dadurch gekennzeichnet, daß** die Stapelabtasteinrichtung (36) im wesentlichen aus mindestens einer Lichtschranke besteht.

11. Vorrichtung nach einem der Ansprüche 1 bis 10, **dadurch gekennzeichnet, daß** jede Entstapelstation (15a-d) mit einer Blechspreizeinrichtung versehen ist.

12. Vorrichtung nach einem der Ansprüche 1 bis 11, **gekennzeichnet durch** die Bauteile (11a,b) von den Bauteilstapeln (19, 20) zu den Zufördereinrichtungen (27, 28) übergebende Übergabevorrichtungen (30).

13. Vorrichtung nach Anspruch 12, **dadurch gekennzeichnet, daß** die Übergabevorrichtungen (30) eine Unterdruckhalteeinheit und/oder mindestens eine Magnethalteeinheit aufweisen.

14. Vorrichtung nach einem der Ansprüche 1 bis 13, **dadurch gekennzeichnet, daß** jede Zufördereinrichtung (27, 28) mindestens zwei von einem gemeinsamen Antrieb angetriebene Bandförderer (29) aufweist, und daß der Abstand der Bandförderer voneinander einstellbar ist.

15. Vorrichtung nach Anspruch 14, **dadurch gekennzeichnet, daß** die Bandförderer (29) mittels motorisch angetriebener Gewindespindel lageverstellbar sind.

16. Vorrichtung nach einem der Ansprüche 1 bis 15, **gekennzeichnet durch** mindestens eine Doppelblechkontrolleinrichtung (37) im Bereich der Zufördereinrichtungen (27, 28) und/oder der Transporteinrichtung (12).

17. Vorrichtung nach einem der Ansprüche 1 bis 16, **dadurch gekennzeichnet, daß** die Transporteinrichtung (12) im wesentlichen aus wenigstens einem Riemenförderer (13a-d, 14a-d) mit Halteeinrichtungen für die Bauteile (11a,b) besteht.

18. Vorrichtung nach Anspruch 17, **dadurch gekennzeichnet, daß** die Halteeinrichtungen aus an der Riemenrückseite angeordneten Unterdruckeinheiten und/oder Magnetelementen bestehen.

19. Verfahren zum Beschicken einer Bearbeitungsstation mit unterschiedlichen plattenförmigen Bauteilen, insbesondere von Blechen zu einer Umformpresse, wobei die unterschiedlichen Bauteile von entsprechenden Bauteilstapeln entnommen und abwechselnd von Zufördermitteln einer Transporteinrichtung aufgegeben werden, **dadurch gekennzeichnet, daß** für jede Bauteilsorte (11a, 11b) je eine Entstapelstation (15a-d) auf jeder Seite (25, 26) der Transporteinrichtung (12) sowie eine eigene, die Entstapelstationen (15a-d) einer Bauteilsorte (11a bzw. 11b) beidseits der Transporteinrichtung (12) erreichende Zufördereinrichtung (27 bzw. 28) vorgesehen wird, und daß von jeder Bauteilsorte (11a bzw. 11b) zuerst ein erster Stapel (19a', bzw. 20a') auf einer Seite (25, bzw. 26) der Transporteinrichtung (12) entstapelt wird und die entstapelten Bauteile der Transporteinrichtung (12) mittels der zugehörigen Zufördereinrichtung (27 bzw. 28) aufgegeben werden, während entsprechende zweite Stapel (19a'' bzw. 20a'') derselben Bauteilsorten (11a bzw. 11b) auf der jeweils anderen Seite (26 bzw. 25) der Transporteinrichtung (12) bereits in Wartestellung zur Zufördereinrichtung (27 bzw. 28) ausgerichtet sind, und daß nach dem Entstapeln der ersten Stapel (19a' bzw. 20a') die zweiten Stapel (19a'' bzw. 20a'') von jeder Bauteilsorte (11a bzw. 11b) entstapelt werden, während an den Stellen der jeweils ersten Stapel (19a' bzw. 20a') neue, dritte Stapel (19b' bzw. 20b') in ihre Wartestellung zur jeweiligen Zufördereinrichtung (27, 28) gebracht werden.

20. Verfahren nach Anspruch 19, **dadurch gekennzeichnet, daß** jeder Stapel (19, 20) nach dem Entnehmen eines Bauteils (11a, 11b) um einen Betrag in der Höhe angehoben wird, der der Dicke des entnommenen Bauteils etwa entspricht.

21. Verfahren nach Anspruch 19 oder 20, **dadurch gekennzeichnet, daß** ein Stapel (19) der einen Bauteilsorte (11a) von einer Seite (25) neben der Transporteinrichtung (12) entstapelt wird, während gleichzeitig ein Stapel (20) der anderen Bauteilsorte (11b) von der gegenüberliegenden Seite (26) neben der Transporteinrichtung (12) entstapelt wird.

22. Verfahren nach einem der Ansprüche 19 bis 21, **dadurch gekennzeichnet, daß** die auf einem Stapel (19 bzw. 20) oben liegenden Bauteile (11) mittels einer Spreizeinrichtung von den jeweils darunterliegenden Bauteilen abgehoben und mittels einer Übergabevorrichtung (30) der jeweiligen Zufördereinrichtung (27 bzw. 28) übergeben und hängend der Transporteinrichtung (12) zugeführt werden.

23. Verfahren nach einem der Ansprüche 19 bis 22, **dadurch gekennzeichnet, daß** nach dem vollständigen Entstapeln eines ersten Stapels (19a' bzw. 20a') an einer ersten Seite (25) der Transporteinrichtung (12) die zweiten Stapel (19a'' bzw. 20a'') aller Bauteilsorten (11a, 11b) an der jeweils gegenüberliegenden Seite (26, 25) der Transporteinrichtung (12) entstapelt werden.
